# EUROPEAN PATENT SPECIFICATION

(11) **EP 1 543 079 B1**
(45) Date of publication and mention of the grant of the patent: **26.01.2011**
(21) Application number: 03794391.7
(22) Date of filing: 03.09.2003
(51) Int. Cl.: C09D 5/16

(54) **SELF-POLISHING ANTIFOULING PAINT**
SELBSTPOLIERENDER ANTIFOULINGLACK
PEINTURE AUTO-LUSTRANTE POUR COQUES DE BATEAUX

(30) Priority: 04.09.2002 SE 0202609
(43) Date of publication of application: 22.06.2005
(73) Proprietor: Ekomarine AB, 113 28 Stockholm (SE)
(72) Inventor: Haeffner, Mikael, 111 31 Stockholm (SE); Ericsson, Claes, Tarras, 132 36 Saltsjö-Boo (SE)
(74) Representative: Söderman, Päivi Karin Lisbeth
(86) International application number: PCT/SE2003/001362
(87) International publication number: WO 2004/022656

(56) References cited:
- EP-A1- 0 869 159
- WO-A1-00/77102
- WO-A1-01/94479
- US-A- 5 770 188

## Description

The present invention relates to a self-polishing antifouling paint or boat-bottom paint of the kind defined in the preamble of Claim 1.

Accordingly, the invention relates to an antifouling paint that includes a binder of relatively low mechanical strength so that the outer paint layer will be worn away by friction with the water and any organisms that have been able to fasten to the paint layer will be carried away with said layer.

With the intention of reducing the number of organisms that fasten to the surface of an antifouling paint when the boat is generally stationary in the water, it is known to make the layer of the paint applied slippery. Moreover, it is also known to add to the paint one or more additives for further reducing the tendency of the organisms to rest on or fasten to the exposed surface of the self-polishing paint. The biologically active substances that are acceptable from an environmental aspect and which have hitherto been used to control the tendency or ability of marine creatures from fastening to the surface of the self-polishing paint, particularly such creatures as molluscs, and barnacles, have a troublesomely low effect. Although being effective, other substances, for instance metal compounds such as copper oxide or tin salts, or TBT, are generally unacceptable from an environmental aspect.

Accordingly, one object of the present invention is to provide a self-polishing paint which contains an environmentally acceptable substance that is effective in making it difficult for marine organisms, for example molluscs, barnacles, from fastening to the water-exposed paint layer.

Another object of the invention is to provide a self-polishing paint, which also includes a substance that obstructs the process of photosynthesis in respect of algae that have fastened to the surface of the paint.

These objects of the invention are achieved with a self-polishing antifouling or boat-bottom paint comprising a binder and a biologically active substance. The paint of the invention is **characterized in that** the binder is of a low mechanical strength so that the outer paint layer will be worn away by friction with the water. Said biologically active substance is incorporated in the antifouling paint in an amount corresponding to 10 - 50 percent of weight. The biologically active substance is soy flour and includes a protein-rich material in the form of a powdered substance, having a particle size between 0,1 mm and 0,001 mm uniformly distributed in the paint composition. Furthermore, the biologically active substance is chosen to be decomposable in the presence of water. Said paint layer is a porous outer layer causing movement difficulties for water received in pores and surface irregularities in the paint layer. Said biologically active substance consumes oxygen during its decomposition process so as to generate an oxygen-lean aqueous environment in the water exposed paint layer. The paint is further **characterized in that** it includes a photosynthesis inhibitor for limiting the growth of algae on the surface of said paint.

The invention is based on the insight that marine creatures, and particular molluscs, have a low tendency to fasten to a paint surface that has a low oxygen content. The invention is also based on the insight that the exposed outer paint layer can be given such a low oxygen content in an aqueous environment, by including in the paint a material which will decompose in the presence of water while consuming oxygen from the surrounding layer of lake water/sea water. Because of its low oxygen content and possibly also because of the decomposition products from said material, said water layer, which is thin and finds movement difficult by virtue of being received in pores and surface irregularities in the paint layer (particularly a porous outer layer of said self-polishing paint), results in a mollusc-unfriendly environment or milieu.

The material may be of a biological or chemical nature.

The biological material is a material rich in protein, such as powdered soy. Said material, for instance the soy powder, will suitably have a particle size that lies in the range of 0.1-0.001 mm and will preferably be divided uniformly in the binder.

At least in some cases, the decomposition products of the material tend to provide an environment that is favourable to algae since they are able to provide an algae nutrient. It is therefore proposed in accordance with the invention that the inventive paint will also include a substance that obstructs the process of photosynthesis with respect to algae that fasten to the paint surface. Such photosynthesis inhibitors are well known in the art and have a relatively small environment loading effect when administered in effective dosages.

Irgarol is a known photosynthesis inhibitor that is compatible with known self-polishing antifouling paints. WO 00/77103 discloses an antifouling paint composition that is suitable with regard to self-polishing antifouling paint of the kind defined in the preamble of Claim 1. Other, older patent specifications mentioned in this latter publication can also be of interest in this regard.

Suitable paint compositions that provide a purposeful self-polishing effect can be read from said publication WO 00/77103.

### Example

There was prepared a paint composition corresponding to model paint composition A described in WO 00/77103, although the copper oxide was excluded and replaced with dry soy meal with a grain size of 0.01 mm. The paint was applied in a surface layer in accordance with the directions given in WO 00/77103.

Such a model paint composition A may include 98 percent solid substance volume of triisopropyl silyl acrylate, 2 percent solid substance volume of hydrogen substance Disperbyk 164 (for example Byk Chemie, Germany), 2 percent solid substance volume, silica Aerosil 200 (for example Degussa, Germany), 2 percent solid substance volume, modified polyethylene wax, Aditix M60 X (for example Supercolori, Italy), 36 percent solid substance volume of soy flour. Solid substance volume ratio: 50; solvent xylene.

The paint was applied as an antifouling paint on a boat lying in Baltic Sea water. Once exposed to the water environment, the soy flour particles went through a biological decomposition process as the outer layer of paint consumed oxygen from the adjacent layer of water. Molluscs were found to have a low tendency to fasten to the outer paint layer.

The soy flour decomposition products were found to enhance the growth of algae. A comparison paint of the same composition but without soy (copper oxide) and including 0.05% Irgarol (registered trademark) gave no effect with regard to the growth of molluscs but had a pronounced limitation on the growth of algae on the paint surface in contact with the water, as a result of its algicidal effect.

The example shows that a self-polishing antifouling paint that contains a significant proportion of a material which decomposes in the presence of water while consuming oxygen from the adjacent layer of water limits the growth of molluscs on the paint and that the photosynthesis inhibitor included in the paint is able to control the increase in the growth of algae on the surface of the paint layer.

The amount of biologically active substance contained by the paint will correspond to the requisite oxygen consumption over the expected lifetime of the paint.

The biologically active substance can be chosen from among chemical substances and biological substances that provide said oxygen consumption in the water layer present in the wet surface layer of the self-polishing paint, said surface layer being sponge-like and thereby significantly restricting the mobility of the contained water mass.

It is preferred in accordance with the invention to use a biological material which consumes oxygen when decomposing in a water environment. In addition to soy flour, there can be used fishmeal, egg powder, ground sea kelp and other similar material.

The biologically active material is incorporated in inventive antifouling paint compositions in an amount corresponding to 10-50 percent by weight, particularly with regard to the paint composition exemplified above in which dry soy flour was incorporated.

## Claims

1. A self-polishing antifouling or boat-bottom paint comprising a binder and a biologically active substance, **characterized in that** the binder is of a low mechanical strength so that the outer paint layer will be worn away by friction with the water and said biologically active substance, is incorporated in the antifouling paint in an amount corresponding to 10 - 50 percent of weight ,is soy flour and includes a protein-rich material in the form of a powdered substance, having a particle size between 0,1 mm and 0,001 mm uniformly distributed in the paint composition and is chosen to be decomposable in the presence of water, whereby said paint layer is a porous outer layer causing movement difficulties for water received in pores and surface irregularities in the paint layer and said biologically active substance consumes oxygen during its decomposition process so as to generate an oxygen-lean aqueous environment in the water exposed paint layer, the paint being further **characterized in that** it includes a photosynthesis inhibitor for limiting the growth of algae on the surface of said paint.

## Patentansprüche

1. Selbstpolierende Antifouling- oder Bootsrumpf-Farbe, bestehend aus einem Bindemittel und einer biologisch aktiven Substanz, **dadurch gekennzeichnet, dass** das Bindemittel von geringer mechanischer Festigkeit ist, so dass die äußere Farbschicht durch Friktion mit Wasser abgenutzt wird und besagte biologisch aktive Substanz in der Antifouling-Farbe in einer Menge integriert ist, die 10 bis 50 Gewichtsprozent entspricht, Sojamehl ist und ein proteinreiches Material in Form einer pulverisierten Substanz mit einer Partikelgröße zwischen 0,1 mm und 0,001 mm, gleichmäßig in der Farbzusammensetzung verteilt aufweist und so ausgewählt ist, dass sie in der Anwesenheit von Wasser abbaubar ist, wobei es bei besagter Farbschicht um eine poröse äußere Schicht handelt, die Bewegungsschwierigkeit für Wasser verursacht, das in den Poren und Oberflächenunregelmässigkeiten der Farbschicht aufgenommen ist, und besagte biologisch aktive Substanz während ihres Abbauprozesses Sauerstoff verbraucht. um eine sauerstoffarme wässrige Umgebung in der dem Wasser ausgesetzten Farbschicht zu erzeugen, wobei die Farbe ferner **dadurch gekennzeichnet ist, dass** sie einen Photosynthese-Inhibitor enthält, um den Algenbewuchs auf der Oberfläche besagter Farbe einzuschränken.

## Revendications

1. Peinture antisalissure auto-lustrante ou peinture pour coque de bateau contenant un liant et une substance biologique active, **caractérisé en ce que** le liant est d'une résistance mécanique faible de manière à ce que la couche supérieure de peinture partira à l'usure par friction avec l'eau et ladite substance active biologique est incorporée dans la peinture antisalissure dans une quantité correspondant à 10 à 50 pourcent du poids, est une farine de soja et comprend un matériau riche en protéine sous forme d'une substance en poudre, ayant une taille de particules entre 0,1 mm et 0,001 mm réparties uniformément dans la composition de la peinture et est choisie pour être décomposable en présence de l'eau, dans laquelle ladite couche de peinture est une couche extérieure poreuse causant des difficultés de mouvement pour l'eau reçue dans les pores et des irrégularités de surface dans la couche de peinture et ladite substance biologique active consomme de l'oxygène pendant son processus de décomposition de manière à générer un environnement aqueux pauvre en oxygène dans la couche de peinture exposée à l'eau, la peinture étant encore **caractérisé en ce qu'**elle comprend un inhibiteur de photosynthèse pour limiter la croissance d'algue sur la surface de ladite peinture.
